# FASCICULE DE BREVET EUROPEEN

(11) **EP 0 987 097 B1**
(45) Date de publication et mention de la délivrance du brevet: **24.11.2004**
(21) Numéro de dépôt: 99402257.2
(22) Date de dépôt: 15.09.1999
(51) Int. Cl.: B32B 5/18, A47L 13/16

(54) **Têtes de balai à franges lavantes et asséchantes**
Mopkörper zum Waschen und Trocknen
Mopheads for washing and drying

(30) Priorité: 16.09.1998 FR 9811543
(43) Date de publication de la demande: 22.03.2000
(73) Titulaire: FINANCIERE ELYSEES BALZAC, F-75008 Paris (FR)
(72) Inventeur: Chalvin, Christophe, 60000 Beauvais (FR); Crux, Christine, 60200 Compiègne (FR); Johnson, Bryan, 60000 Beauvais (FR); Veillerobe, Philippe, 60650 Saint Paul (FR)
(74) Mandataire: Le Roux, Martine

(56) Documents cités:
- EP-A- 0 335 050
- FR-A- 2 680 670
- US-A- 4 341 832
- US-A- 5 217 787

## Description

La présente invention a pour objet des têtes de balai à franges lavantes et asséchantes. Elle a plus précisément pour objet des têtes de balai à franges qui incluent des franges bifonctionnelles et qui conviennent parfaitement pour les mises en oeuvre, successives, du lavage d'une surface et de l'assèchement ou essuyage de ladite surface.

Selon l'art antérieur, on a proposé depuis longtemps, à titre d'outil d'entretien ménager, des produits essuyants du type peau monoface ou biface, présentant une structure composite qui comprend un substrat hydrophile, notamment un substrat fibreux ou alvéolaire, à au moins une face duquel est solidarisée une mousse hydrophobe à porosité ouverte. Lesdits produits s'utilisent *per se,* sous la forme de lavettes, ou introduits dans des structures plus complexes ...

Les balais à franges sont proposés, eux-aussi, depuis longtemps, pour le nettoyage des sols. Ils se sont tout d'abord déclinés avec des franges en fils de coton. On a ensuite proposé sur le marché des balais à franges plates; lesdites franges plates étant en un matériau flexible, plus ou moins absorbant, tel la peau de chamois, la flanelle, les feutres ... De tels balais à franges plates et des procédés pour leur fabrication ont été décrits dans le brevet ES-B-443 125. De manière générale, lesdits balais à franges plates comportent une tête solidarisée à un manche; ladite tête comportant elle-même l'ensemble des franges solidarisées entre elles et à un capuchon par l'intermédiaire d'un dispositif adéquat. Un tel dispositif adéquat peut notamment consister en un doigt central, tel que décrit dans le brevet GB-B-1 587 445. Il peut être d'un autre type.

A ce jour, à la connaissance de la Demanderesse, on n'a pas proposé de balais à franges qui comportent des franges bifonctionnelles dans le but d'améliorer leurs propriétés d'essuyage.

On a certes décrit, dans la demande ES-A-2 110 880, un balai à franges dont les franges présentent une structure multicouche, associant au moins une couche absorbante à une couche dite résistante ou couche de renfort. Ladite structure multicouche n'induit pas d'amélioration des propriétés d'essuyage desdites franges.

En référence à ce problème technique particulier de l'essuyage, la Demanderesse propose présentement un nouveau type de balai à franges, plus précisément un nouveau type de têtes de balai à franges, encore plus précisément l'intervention d'un nouveau type de matériau dans la constitution de franges de balais à franges.

Les têtes de balai à franges de l'invention sont fixées ou destinées à être fixées (solidarisées) à un manche pour constituer un balai à franges et elles comportent un ensemble de franges plates rendues solidaires. En cela, elles constituent des têtes de balais à franges plates du type de celles de l'art antérieur.

Elles se distinguent de telles têtes de balais à franges plates selon l'art antérieur de par leur principale caractéristique originale énoncée ci-après : au moins une partie des franges plates de l'ensemble desdites franges plates des têtes de l'invention (toutes lesdites franges plates ou une partie seulement d'entre elles) est au moins en partie (les franges en question présentent localement ou dans leur intégralité la structure composite énoncée ci-après) en au moins un matériau composite (il intervient généralement dans la structure d'une frange, dans la structure de toutes les franges en question, le même matériau composite mais il n'est pas exclu de faire intervenir au moins deux matériaux de ce type dans la structure d'une frange, dans la structure de différentes franges d'une tête de balai à franges selon l'invention) qui comprend un substrat hydrophile à une face duquel est solidarisée, sur au moins une partie de la surface de ladite face, une mousse hydrophobe à porosité ouverte.

Les têtes de balai à franges de l'invention renferment donc, de façon caractéristique, des franges originales; originales en ce qu'elles sont, au moins en partie, en un produit essuyant du type précité : matériau composite qui comprend un substrat hydrophile à une face duquel est solidarisée, sur au moins une partie de la surface de ladite face, une mousse hydrophobe à porosité ouverte. Ledit produit essuyant est du type peau monoface si la mousse hydrophobe intervient sur toute la surface de ladite face du substrat hydrophile. Ladite mousse peut toutefois ne recouvrir que partiellement ladite face, par exemple selon des motifs. Avantageusement, les franges originales des têtes de balais à franges de l'invention sont au moins en partie en un produit essuyant de type peau monoface ; de façon particulièrement préférée, elles sont constituées dans leur intégralité d'un produit essuyant de type peau monoface (elles consistent en des peaux monofaces).

On a déjà compris que le concept de l'invention - présence, dans un ensemble de franges de têtes de balai à franges, de franges présentant une structure originale, présentant une face lavante (face du substrat hydrophile non revêtue de la mousse hydrophobe) et une face essuyante ou asséchante (autre face dudit substrat hydrophile, revêtue au moins partiellement de la mousse hydrophobe) - peut se décliner selon de nombreuses variantes.

On conçoit que pour l'obtention de l'effet escompté, il se décline avec une certaine logique *i.e.* avec un nombre minimal de franges au moins en partie en au moins un tel matériau composite, disposées de préférence majoritairement dans le même sens - face asséchante orientée vers l'extérieur ou vers l'intérieur - de sorte que, selon le mode d'utilisation du balai, on optimise le contact desdites faces asséchantes avec la surface à assécher.

On précise ci-après différentes variantes de réalisation de têtes de balais à franges selon l'invention.

On a vu qu'au sein des têtes de l'invention, au moins certaines franges de l'ensemble de franges sont en moins en partie en au moins un matériau composite tel que précisé, matériau composite qui comporte une face lavante et une face asséchante (face au moins partiellement revêtue de la mousse hydrophobe).

En référence à l'expression "au moins en partie", on peut préciser ce qui suit. Les franges de structure originale qui interviennent dans les têtes de balais à franges de l'invention sont constituées, soit dans leur intégralité soit seulement en partie, d'au moins un matériau composite du type précité. On conçoit ainsi notamment l'intervention de franges en un tel matériau composite sur seulement une partie de leur largeur, sur toute leur longueur ou sur seulement une partie de leur longueur, sur toute leur largeur (par exemple, avantageusement de part et d'autre de leur partie centrale de fixation (en un autre matériau) ou en leur deux extrémités seulement). De telles franges peuvent notamment être à base d'un même substrat hydrophile, recouvert en partie seulement d'une mousse hydrophobe à porosité ouverte.

De telles franges ne présentent de propriétés essuyantes que sur la partie de leur face recouverte de ladite mousse. Cette variante de mise en oeuvre de l'invention - avec des franges de structure hétérogène, essuyantes sur seulement une partie de l'une de leurs faces - permet de réduire la quantité de mousse(s) hydrophobe(s) nécessaire ou de modifier l'aspect du produit (la mousse intervenant par exemple selon des motifs). Toutefois, pour des raisons pratiques, on prépare généralement les têtes de balais à franges de l'invention avec des franges rendues essuyantes sur l'intégralité de l'une de leurs faces ; avantageusement avec des franges identiques, à base du même substrat hydrophile recouvert, sur l'une de ses faces, de la même mousse ...

Au sein des têtes de balai à franges de l'invention, on a donc avantageusement au moins une partie des franges plates en au moins un matériau composite du type précité (franges de structure homogène, identiques ou pas ... On note ici que l'on ne saurait totalement exclure, du cadre de l'invention, l'intervention d'au moins deux types de matériaux composites précités au sein de la structure d'une même frange; ceci ne présentant pas *a priori* toutefois un grand intérêt) ; avantageusement au moins une partie desdites franges plates en un (même) matériau composite du type précité (franges de structure homogène, toutes identiques).

Indépendamment de ce qui précède (développement sur l'expression "au moins en partie"), les têtes de balais à franges de l'invention existent selon deux principales variantes : toutes leurs franges ou seulement une partie d'entre elles sont des franges bifonctionnelles : lavantes (sur une de leurs faces) et essuyantes (sur au moins une partie de leur autre face).
- Selon la première desdites principales variantes, toutes les franges de l'ensemble des franges de la tête sont au moins en partie en un(des) matériau(x) composite(s) du type précité; avantageusement en un (même) matériau composite du type précité. Toutes lesdites franges (identiques ou pas : franges de structure homogène ou hétérogène, à base d'un unique ou de plusieurs matériaux composites du type précité; avantageusement identiques) sont des franges essuyantes (au moins en partie) au sens de l'invention. Dans le cadre de cette première variante, on préfère tout particulièrement les têtes dont les franges du type rappelé ci-dessus ont été rendues solidaires de sorte que leurs faces revêtues au moins partiellement de mousse hydrophobe soient orientées dans le même sens, avantageusement vers l'extérieur. L'orientation desdites franges dans le même sens permet, lors de l'utilisation du balai, en phase d'assèchement de la surface nettoyée, d'exprimer au mieux leur caractère asséchant. L'orientation, face asséchante vers l'extérieur, est préférée dans la mesure où l'on utilise généralement, pour la mise en oeuvre de ladite phase d'assèchement, la tête de balai, comme un tout. On utilise ainsi surtout les faces externes des franges. Dans le cadre de cette variante tout particulièrement préférée, on a avantageusement toutes les franges en le même matériau du type précité, lavante sur l'une de leurs faces, essuyante sur avantageusement l'intégralité de leur autre face, revêtue d'une même mousse hydrophobe.

Ainsi, on préfère tout particulièrement selon l'invention, les têtes de balai à franges dont toutes les franges sont (dans leur intégralité) en un matériau composite du type peau monoface - matériau composite qui comprend un substrat hydrophile revêtu sur toute la surface de l'une de ses faces d'une mousse hydrophobe à porosité ouverte - et dont lesdites franges ont été rendues solidaires de sorte que leurs faces revêtues intégralement de ladite mousse hydrophobe soient orientées dans le même sens, avantageusement vers l'extérieur.
- Selon la seconde desdites principales variantes, une partie seulement des franges de l'ensemble des franges de la tête est au moins en partie en un(des) matériau(x) composite(s) du type précité ; avantageusement en un (même) matériau composite du type précité. Selon cette variante, des franges bifonctionnelles au sens de l'invention interviennent en mélange, au sein de l'ensemble des franges de la tête, avec des franges de l'art antérieur. Pour que lesdites franges bifonctionnelles expriment au mieux leurs propriétés essuyantes, on préconise vivement de solidariser l'ensemble des franges de la tête - franges essuyantes au sens de l'invention + franges de l'art antérieur - de sorte que lesdites franges bifonctionnelles se trouvent en périphérie dudit ensemble, leurs faces revêtues au moins partiellement de ladite mousse orientées vers l'extérieur. Avantageusement, il intervient des franges essuyantes d'un même type revêtues sur l'intégralité de l'une de leurs faces de la mousse hydrophobe.

Quel que soit leur mode spécifique de réalisation, les têtes de balais à franges de l'invention englobent, de façon caractéristique, des franges bifonctionnelles :
- lavantes sur l'une de leur face (face du substrat hydrophile non recouverte de mousse) ;
- essuyantes sur au moins une partie de leur autre face (partie de ladite autre face recouverte de mousse).

On se propose maintenant de fournir quelques précisions sur le substrat hydrophile et la mousse hydrophobe susceptibles de constituer en combinaison des franges lavantes et asséchantes au sens de l'invention.

Ladite mousse hydrophobe et ledit substrat hydrophile sont respectivement des mousse et substrat du type de ceux qui interviennent dans la constitution des produits essuyants de l'art antérieur.

Ledit substrat hydrophile intervient pour laver, absorber et retenir le liquide essuyé. Il présente avantageusement un temps d'absorption de liquide faible, une rétention de liquide forte et pour ce faire, notamment, une forte teneur en fibres cellulosiques (avantageusement supérieure à 70 % en poids), le titre desdites fibres étant généralement faible (avantageusement inférieur à 5 dtex, voire inférieur à 3 dtex).

Ledit substrat hydrophile est généralement un substrat fibreux ou alvéolaire choisi parmi les textiles, les mousses synthétiques et les matériaux alvéolaires cellulosiques. Il présente généralement une structure continue.

Ledit substrat hydrophile est avantageusement choisi parmi les nontissés, les tissus, les tricots ou matériaux alvéolaires cellulosiques du type éponge ou toile-éponge.

De tels matériaux alvéolaires cellulosiques sont notamment tels que décrits dans la demande EP-A-335 050.

Pour ce qui concerne les supports fibreux du type nontissé, tissu ou tricot, on peut préciser ce qui suit. Ils peuvent notamment contenir des fibres naturelles ou artificielles, par exemple, des fibres de coton, de rayonne, d'acétate de cellulose, éventuellement en mélange avec des fibres synthétiques, par exemple des fibres de polyester de polyamide, de polypropylène ...

Les nontissés sont obtenus et consolidés par des moyens connus de l'homme de l'art. Ils peuvent notamment être obtenus par voie aéraulique, par voie pneumatique ou par cardage et ils sont généralement consolidés par des moyens mécaniques tels que l'aiguilletage mécanique ou hydraulique, par thermoliage ou par des moyens chimiques. On préconise tout particulièrement l'intervention, dans la structure composite des franges essuyantes de l'invention, à titre de substrat hydrophile, de nontissés résinés (liés chimiquement) sur une seule de leurs deux faces principales ; leur autre face principale étant ensuite recouverte au moins en partie d'une mousse hydrophobe à porosité ouverte. Il n'est toutefois bien évidemment nullement exclu d'obtenir des franges essuyantes à partir de nontissés résinés sur leur deux faces principales ; au moins l'une desdites deux faces étant alors recouverte au moins en partie d'une mousse hydrophobe à porosité ouverte.

Ledit substrat hydrophile peut aussi consister en une mousse synthétique, notamment en une mousse de polyuréthanne hydrophilisée.

La mousse hydrophobe, solidarisée à au moins une partie de la surface d'une face dudit substrat hydrophile peut elle aussi exister selon différentes variantes. Il peut notamment s'agir d'une mousse de polyuréthanne (mousse PU), de polychlorure de vinyle (mousse PVC), de polyvinylalcool (mousse PVA) ou d'une mousse de latex. Il s'agit avantageusement d'une mousse de latex, notamment obtenue à partir d'une formulation à base de latex butadiène - styrène-acrylonitrile (dit latex BSN) et/ou de latex butadiène-acrylonitrile (dit latex NBR). De telles mousses sont familières à l'homme du métier. Il en est de même de leur procédé de préparation.

Pour ce qui concerne les mousses de latex, particulièrement préférées à titre de mousse hydrophobe des franges essuyantes de l'invention, plus précisément les matières premières de base entrant dans les formulations permettant d'obtenir lesdites mousses et leur procédé d'obtention, on peut se reporter à l'enseignement de la demande EP-A-335 050, incorporé ici à titre de référence.

Selon une variante particulièrement préférée, les franges essuyantes des têtes de balai à franges de l'invention comprennent :
- un nontissé, à titre de substrat hydrophile ;
- une mousse de latex obtenue à partir d'une formulation à base de latex butadiène-styrène-acrylonitrile et/ou butadiène-acrylonitrile, à titre de mousse hydrophobe (sur une des faces dudit nontissé, recouvrant en totalité ou en partie seulement ladite face).

Les franges essuyantes de l'invention dont la nature a été précisée ci-dessus sont généralement préparées par un procédé classique qui comprend les trois étapes ci-après :
- la préparation d'une mousse hydrophobe à porosité ouverte;
- la solidarisation de ladite mousse à un substrat hydrophile, notamment par collage ou enduction puis traitement thermique ;
- la découpe du substrat ainsi recouvert de mousse en franges.

Les deux étapes de préparation de la mousse et de solidarisation de ladite mousse au substrat hydrophile peuvent être menées de façon tout à fait indépendante (la mousse finale étant préparée dans un premier temps puis solidarisée au substrat, par collage ou couture par exemple) ou peuvent être menées de façon concomitante dans la mesure où la mousse finale ne peut être générée que lors de sa solidarisation au substrat hydrophile (une mousse est préparée, elle est enduite puis traitée thermiquement, ledit traitement thermique assurant à la fois l'obtention de la mousse finale et sa fixation sur le substrat).

On se propose de préciser ci-après, en référence à une mousse de latex, son obtention et sa fixation sur un substrat hydrophile.

On formule, dans un premier temps, une composition aqueuse de latex. Ladite composition de latex présente avantageusement une viscosité Brookfield comprise entre 1 500 et 5 500 mPa. s et un pH compris entre 7 et 9.

Celle-ci est alors expansée selon des procédés classiques, connus en eux-mêmes de l'homme de l'art. Une telle expansion est, par exemple, réalisée dans un mousseur continu permettant d'atteindre une masse volumique comprise entre 150 et 400 g/l.

Après expansion, la mousse obtenue est enduite sur le substrat hydrophile selon des modes opératoires connus en eux-mêmes. On peut, par exemple, utiliser un enducteur rouleau-râcle, un enducteur rouleau-rouleau ou un enducteur rouleau Storck sur un cadre rotatif de sérigraphie.

La quantité de mousse déposée doit permettre d'obtenir un bon accrochage sur le substrat et un éloignement dudit substrat de la surface à essuyer par une couverture totale. La quantité de matière déposée, en poids sec, se situe favorablement entre 40 et 150 g/m² et dépend essentiellement du mode d'enduction et/ou de la planéité du substrat (de la face destinée à être enduite en totalité ou en partie de celui-ci).

Une fois le substrat enduit avec la mousse expansée, celui-ci est soumis à un traitement thermique. Un tel traitement thermique comprend avantageusement deux étapes :
- une première étape constituée d'un flash thermique, par exemple mis en oeuvre sous des panneaux infrarouges, pour gélifier, figer et ancrer la mousse ;
- une seconde étape constituée d'un chauffage dans un four, pour réticuler le(les) latex entrant dans la formulation de base de celle-ci.

Les précisions données ci-dessus le sont à titre illustratif et nullement limitatif.

A toutes fins utiles, on peut également indiquer, dans le même esprit, que le substrat hydrophile intervenant présente généralement une épaisseur de 1 à 3 mm et que ladite mousse, solidaire d'une face dudit substrat hydrophile (en fait à au moins une partie de ladite face), présente elle généralement une épaisseur de 0,5 à 1 mm.

Les franges essuyantes des têtes de balai à franges selon l'invention sont donc, au moins en partie, en un matériau essuyant du type précisé ci-dessus, matériau essuyant qui comprend un substrat hydrophile à une face duquel est solidarisée, sur au moins une partie de la surface de ladite face, une mousse hydrophobe à porosité ouverte.

La Demanderesse a vérifié, en utilisant des têtes de balai à franges de l'invention, que le caractère asséchant de l'une des faces des franges originales (lavantes et asséchantes) s'exprimait parfaitement. Elle a toutefois noté que l'intervention desdites franges originales, en fait l'intervention de la mousse hydrophobe, affectait la glissabilité desdites franges sur la surface à nettoyer et à assécher. Ceci ne saurait surprendre l'homme du métier.

Dans le cadre de la présente invention, elle a cherché à améliorer ladite glissabilité et propose donc une variante optimisée de balai à franges lavantes et asséchantes. Selon ladite variante optimisée, on fait intervenir au sein de la mousse hydrophobe des charges minérales et/ou organiques, en une quantité suffisante pour l'obtention de l'effet recherché : amélioration de la glissabilité du produit sur les surfaces à essuyer, diminution de l'adhésivité dudit produit auxdites surfaces ainsi que sur lui-même (effet de "tack").

De façon surprenante, l'intervention des charges, au sein de la mousse, réduit significativement l'effet ventouse inhérent aux pores de ladite mousse, sans altérer outre mesure les propriétés d'essuyage et d'asséchage du matériau composite incluant ladite mousse dans sa structure.

Pour l'obtention de l'effet escompté, il intervient plus de 1% en poids, avantageusement plus de 5 % en poids, par rapport au poids sec de la mousse, de charges minérales et/ou organiques.

On note ici que lesdites charges, intervenant pour améliorer la glissabilité du produit, interviennent à un taux supérieur à celui de charges éventuellement présentes, de façon classique, au sein de la mousse, telles des pigments conférant, par exemple, à ladite mousse, une couleur donnée ; l'introduction de telles charges n'améliorant pas la glissabilité de ladite mousse.

On a vu que lesdites mousses chargées au sens du perfectionnement de l'invention renferment plus de 1 % en poids, avantageusement plus de 5 % en poids, de charges. Pour ce qui concerne la quantité d'intervention maximale desdites charges au sein desdites mousses, les inventeurs préconisent d'en faire intervenir moins de 40 %, avantageusement moins de 35 % en poids, toujours par rapport au poids sec desdites mousses.

En fait, il existe bien évidemment une limite supérieure théorique à la quantité d'intervention desdites charges au sein desdites mousses (on peut parler d'un taux de concentration volumique critique, taux qui correspond à l'occupation de tout le volume libre de la mousse) et cette limite supérieure dépend de la nature et de la granulométrie des charges en cause.

On retient ici que lesdites charges interviennent généralement à raison de plus de 1 % à moins de 40% en poids, par rapport au poids sec de la mousse et avantageusement à raison de 5 à 35 % en poids. L'augmentation conséquente de la quantité de charges induit généralement une amélioration de la glissabilité du produit mais entraîne une réduction de ses propriétés d'essuyage. Le pourcentage optimal d'intervention dépend bien évidemment de la nature chimique des charges mais est souvent voisin de 30 % en poids.

L'homme du métier a par ailleurs déjà compris que la nature et le taux d'intervention desdites charges doit évidemment aussi être compatible avec le procédé d'élaboration de la mousse et celui, éventuel, de son enduction sur le substrat hydrophile.

On a parlé de charges organiques et/ou minérales. Il intervient avantageusement des charges organiques. De telles charges organiques peuvent intervenir sous des formes quelconques, notamment sous des formes à symétrie de révolution, telles des sphères ou des formes asymétriques, telles des écailles ou fragments.

L'intervention de charges minérales, elles aussi de forme quelconque, seules ou en mélange avec des charges organiques, n'est pas exclue mais peut, dans certains contextes, se révéler délicate. En effet, il existe des incompatibilités entre certaines charges minérales et certains constituants de la mousse... Par ailleurs. des charges minérales sont susceptibles de rayer la surface asséchée... On peut toutefois mentionner, dans le cadre de l'invention, l'intervention de charges minérales telles des particules de verre, de silice, de talc, de carbonate de calcium ou d'alumine.

A titre de charges organiques, on préconise l'intervention de charges en un matériau choisi parmi les polyéthylènes (notamment dits haute ou basse densité), les polypropylènes, les polychlorures de vinyle, les polystyrènes, les polyacrylates, les polyméthacrylates (notamment les polyméthacrylates de méthyle ou PMMA), les polyacétates de vinyle, les polyesters insaturés, les polyuréthanes, les polyamides, les copolymères correspondants (notamment les copolymères de chlorure et d'acétate de vinyle), les résines mélamine-formol et les résines phénoliques. Cette liste n'est nullement exhaustive.

Lesdites charges, en lesdits matériaux, peuvent être obtenues de façon connue en soi, par broyage mécanique (on génère alors des fragments ou écailles) ou par des techniques d'émulsion/suspension (on génère alors des charges à symétrie de révolution).

La Demanderesse a noté que la nature des charges utilisées influe fortement sur les propriétés des produits finis. Elle a plus particulièrement relevé que des charges de polyéthylène, notamment haute densité, de polychlorure de vinyle (PVC) ou d'un copolymère de chlorure et d'acétate de vinyle permettent d'obtenir des produits très performants.

En référence à la taille desdites charges, on peut préciser ce qui suit. D'une manière générale, ladite taille n'est pas critique. L'augmentation de la granulométrie des charges permet, en général, d'obtenir un meilleur compromis mais une très large gamme de granulométries (entre quelques microns et quelques centaines de microns) permet d'obtenir des résultats satisfaisants. En fait, les charges intervenant au sens du perfectionnement de l'invention ont, en principe, leur plus grande dimension comprise entre 5 et 600 µm, avantageusement entre 10 et 400 µm. Il n'est nullement exclu de faire intervenir, en mélange, des charges de granulométrie différentes. De la même façon, il n'est nullement exclu de faire intervenir des charges dont au moins une des dimensions est supérieure à l'épaisseur de la mousse au sein de laquelle on les trouve. Lesdites charges peuvent alors éventuellement exercer un effet grattant, récurant.

De façon caractéristique, dans le cadre du perfectionnement de l'invention, les charges décrites ci-dessus interviennent dans une mousse hydrophobe à porosité ouverte solidarisée à un substrat hydrophile, le tout constituant des franges essuyantes de balais à franges à glissabilité améliorée.

Lesdites charges organiques et/ou minérales sont incorporées aux formulations permettant d'obtenir lesdites mousses . Elles ne doivent pas, bien évidemment, compromettre ledit procédé d'obtention. Lesdites charges interviennent dans ledit procédé tel que décrit en amont dans le présent texte.

Dans le cadre d'une variante avantageuse, lesdites charges minérales et/ou organiques intervenantes sont en un (des) matériau(x) non absorbant(s) de liquides aqueux.

Selon une variante particulièrement préférée de la présente invention, les franges essuyantes des têtes de balais à franges de l'invention comprennent :
- un nontissé, à titre de substrat hydrophile ;
- une mousse de latex obtenue à partir d'une formulation à base de latex butadiène-styrène-acrylonitrile et/ou butadiene-acrylonitrile, à titre de mousse hydrophobe sur l'une des faces dudit nontissé; ladite mousse hydrophobe renfermant des charges de polychlorure de vinyle et/ou des charges de polyéthylène, dans les quantités préconisées ci-dessus.

Avec de telles franges, on peut obtenir des têtes de balai à franges, lavantes, essuyantes, aisées à manipuler (qui glissent bien).

L'invention est illustrée par les exemples ci-après.

La Demanderesse a préparé et testé des têtes de balais à franges selon l'art antérieur et selon l'invention. Lesdites têtes comportent 20 franges; chacune, d'une largeur de 40 mm et d'une longueur de 45 cm, franges solidarisées au milieu de leur longueur, à un capuchon en matière plastique. Ledit capuchon est adapté pour être monté sur un manche.

Lesdites 20 franges sont toutes, dans leur intégralité, en le même matériau, à savoir :
- pour la tête de balai à franges selon l'art antérieur (tête A), en un nontissé qui présente les caractéristiques ci-après :

| | |
|---|---|
| grammage | 190 g/m² |
| composition des fibres | viscose (2,2 dtex) : 75 % en poids polyester (1,7 dtex) : 25 % en poids |
| consolidation | liage chimique sur ses deux faces (dépôt : 15 g/m²) ; |

- pour les têtes de balai à franges selon l'invention (têtes B₁ et B₂) en un nontissé du même type, présentant les caractéristiques ci-après :

| | |
|---|---|
| grammage | 190 g/m² |
| composition des fibres | viscose (2,2 dtex) : 75 % en poids polyester (1,7 dtex) : 25 % en poids |
| consolidation | liage chimique sur une seule de ses deux faces (dépôt : 15 g/m²), |

revêtu sur sa face vierge (non consolidée) d'une mousse hydrophobe à porosité ouverte non chargée (tête B₁) ou chargée (tête B₂).

L'élaboration, la composition et le mode de fixation desdites mousses non chargée et chargée audit nontissé sont précisées ci-après.

Toutes les franges des têtes de balai à franges B₁ et B₂ de l'invention ont été montées de sorte que leur face revêtue de la mousse hydrophobe soit orientée vers l'extérieur.

Les mousses présentes sur la face "externe" des franges des balais B₁ et B₂ ont été obtenues comme suit.

Une formulation de latex (F₁), dont la composition est précisée dans le tableau I ci-après, a tout d'abord été préparée.

**TABLEAU I**

| Constituant | Extrait sec (%) | % en poids dans la formulation |
|---|---|---|
| Latex NBR (butadiène-acrylonitrile) | 41 | 74,98 |
| Latex BSN (butadiène-styrène-acrylonitrile) | 40 | 5,97 |
| Pigment | 67 | 0,48 |
| Agent d'ajustement du pH | 5 | 0.29 |
| Agent moussant | 33,3 | 1,19 |
| Agent stabilisant de mousse | 30 | 0,26 |
| Agent coagulant | 25 | 1,19 |
| Catalyseur | 10 | 2,27 |
| Epaississant | 6,25 | 10,44 |
| Agent anti-tack | 50 | 2,92 |

Ladite formulation F₁ est utilisée telle quelle pour la préparation des franges du balai B₁. Elle présente :
- une viscosité Brookfield égale à 1 600 mPa.s;
- un pH de 8,2 ;
- un point de coagulation de 53°C ;
- un extrait sec de 36,58 %.

Pour la préparation des franges du balai B₂, elle est chargée avec des charges organiques en polychlorure de vinyle (PVC) commercialisées sous la dénomination LACOVYL PS 1050 par la société ELF ATOCHEM. Lesdites charges ont une granulométrie moyenne de 30 µm. Elles sont ajoutées à raison de 19,69 parties en poids pour 100 parties en poids de la formulation F₁, pour obtenir une formulation F₂. Ladite formulation F₂ présente :
- une viscosité Brookfield égale à 2 160 mPa.s ;
- un pH de 8,2 ;
- un point de coagulation de 53°C ;
- un extrait sec de 47,01 %.

Les formulations de latex F₁ non chargée et F₂ chargée sont expansées dans un mousseur de façon à atteindre une densité voisine de 200 g/l. (Des produits convenant aux fins de l'invention ont été préparés avec des mousses chargées et non chargées dont la densité était comprise entre 150 et 300 g/l).

Lesdites formulations expansées sont enduites sur la face vierge du nontissé à l'aide d'un enducteur rouleau-râcle.

Les nontissés enduits sont alors soumis à un flash thermique (action des infrarouges) puis à un traitement thermique à l'air chaud.

Les produits essuyants (sur leur face recouverte de la mousse hydrophobe) obtenus sont découpés pour constituer les franges et celles-ci sont solidarisées de façon classique à un capuchon en matière plastique pour constituer les têtes de balai à franges de l'invention B₁ et B₂. La mousse hydrophobe des franges de la tête de balai B₂ renferme 35 % en poids, par rapport à son poids sec, de charges de PVC.

La tête de balai à franges A selon l'art antérieur est obtenue à partir du nontissé consolidé sur ses deux faces de la même manière (découpe des franges aux mêmes dimensions, montage de celles-ci sur le même type de capuchon).

Lesdites têtes A, B₁ et B₂ ont été fixées, chacune, à un manche de même type.

Elles se sont révélées, toutes trois, performantes au lavage ; lavage mis en oeuvre, avantageusement de façon classique, avec principalement les faces internes des franges, avec la tête de balai "éclatée" sur la surface à laver. Un lavage performant peut aussi être obtenu, mis en oeuvre avec les faces externes des franges.

Pour comparer leur performance à l'essuyage, on a procédé comme suit. Les balais munis des têtes A, B₁ et B₂ ont été utilisés avec un seau muni d'un dispositif d'essorage. Leurs têtes ont été successivement trempées dans ledit seau contenant de l'eau à 20°C, essorées avec le dispositif d'essorage dudit seau de la même manière et passées ("éclatées") sur une surface pour la laver, en effectuant un même mouvement. On a ensuite, sur ladite surface lavée, pour son essuyage, passé lesdites têtes, utilisées alors comme un tout (faces externes des franges en contact avec la surface à essuyer), en effectuant un même mouvement. On a enfin, immédiatement après ce second passage, évalué la quantité d'eau laissée sur ladite surface (pour ce faire, on a essuyé ladite surface avec des feuilles d'un papier d'essuyage préalablement tarées : la différence de masse des feuilles avant et après l'essuyage correspondant à la quantité d'eau laissée sur la surface par les têtes de balais).

La tête de balai A, selon l'art antérieur, lave bien, glisse bien mais essuie peu.

La tête de balai B₁, selon l'invention, lave bien, essuie beaucoup mieux mais se révèle quelque peu difficile à manipuler dans la mesure où elle ne glisse pas très bien. En fait, on peut ressentir une certaine fatigue à la manipuler au-delà d'un certain temps.

La tête de balai B₂, selon une variante préférée de l'invention, lave bien, essuie mieux que la tête de balai A et glisse très bien.

Lesdites têtes de balai B₁ et B₂ présentent par ailleurs une bonne résistance à l'usure.

## Revendications

1. Tête de balai à franges, fixée ou destinée à être fixée à un manche pour constituer un balai à franges, comportant un ensemble de franges plates rendues solidaires, **caractérisée en ce qu'**au moins une partie des franges plates dudit ensemble est au moins en partie en au moins un matériau composite qui comprend un substrat hydrophile à une face duquel est solidarisée, sur au moins une partie de la surface de ladite face, une mousse hydrophobe à porosité ouverte.

2. Tête de balai à franges selon la revendication 1, **caractérisée en ce qu'**au moins une partie des franges plates dudit ensemble est en au moins un matériau composite du type précité; avantageusement en un matériau composite du type précité.

3. Tête de balai à franges selon l'une des revendications 1 ou 2, **caractérisée** en que toutes les franges dudit ensemble sont au moins en partie en un(des) matériau(x) composite(s) du type précité ; avantageusement en un matériau composite du type précité.

4. Tête de balai à franges selon la revendication 3, **caractérisée en ce que** lesdites franges ont été rendues solidaires de sorte que leurs faces revêtues au moins partiellement de mousse hydrophobe soient orientées dans le même sens, avantageusement vers l'extérieur.

5. Tête de balai à franges selon la revendication 4, **caractérisé en ce que** toutes les franges dudit ensemble sont en un matériau composite, qui comprend un substrat hydrophile revêtu sur toute la surface de l'une de ses faces d'une mousse hydrophobe à porosité ouverte et ont été rendues solidaire de sorte que leurs faces intégralement revêtues de mousse hydrophobe soient orientées dans le même sens, avantageusement vers l'extérieur.

6. Tête de balai à franges selon l'une des revendications 1 ou 2, **caractérisée en ce qu'**une partie seulement des franges dudit ensemble est au moins en partie en un(des) matériau(x) composite(s) du type précité; avantageusement en un matériau composite du type précité.

7. Tête de balai à franges selon la revendication 6, **caractérisée en ce que** les franges dudit ensemble ont été rendues solidaires de sorte que lesdites franges au moins partiellement en ledit(lesdits) matériau(x) composite(s) se trouvent en périphérie dudit ensemble, leurs faces revêtues au moins partiellement de ladite mousse orientées vers l'extérieur.

8. Tête de balai à franges selon l'une quelconque des revendications 1 à 7, **caractérisée en ce que** ledit substrat hydrophile est un nontissé, un tissu, un tricot, une mousse de polyuréthanne hydrophilisée ou un matériau alvéolaire cellulosique du type éponge ou toile-éponge.

9. Tête de balai à franges selon l'une quelconque des revendications 1 à 8, **caractérisée en ce que** ladite mousse hydrophobe consiste en une mousse de polyuréthanne, de polychlorure de vinyle, de polyvinylalcool ou avantageusement en une mousse de latex.

10. Tête de balai à franges selon la revendication 9, **caractérisée en ce que** ladite mousse hydrophobe consiste en une mousse de latex obtenue à partir d'une formulation à base de latex butadiène-styrène-acrylonitrile et/ou butadiène-acrylonitrile.

11. Tête de balai à franges selon l'une quelconque des revendications 1 à 10, **caractérisée en ce que** ladite mousse hydrophobe renferme plus de 1% en poids, avantageusement plus de 5% en poids, par rapport à son poids sec, de charges minérales et/ou organiques.

12. Tête de balai à franges selon la revendication 11, **caractérisée en ce que** ladite mousse renferme moins de 40%, avantageusement moins de 35%, en poids, par rapport à son poids sec, desdites charges.

13. Tête de balai à franges selon l'une des revendications 11 ou 12, **caractérisée en ce que** lesdites charges sont des charges organiques qui présentent une forme à symétrie de révolution et consistent notamment en des sphères ou qui présentent une forme asymétrique et consistent notamment en des écailles ou fragments.

14. Tête de balai à franges selon l'une quelconque des revendications 11 à 13, **caractérisée en ce que** lesdites charges sont des charges organiques en un matériau choisi parmi les polyéthylènes, les polypropylènes, les polychlorures de vinyle, les polystyrènes, les polyacrylates, les polyméthacrylates, les polyacétates de vinyle, les polyesters insaturés, les polyuréthanes, les polyamides, les copolymères correspondants, les résines mélamine-formol et les résines phénoliques.

15. Tête de balai à franges selon l'une quelconque des revendications 11 à 14, **caractérisée en ce** lesdites charges ont leur plus grande dimension comprise entre 5 et 600 µm, avantageusement entre 10 et 400 µm.

16. Tête de balai à franges selon l'une quelconque des revendications 11 à 15, **caractérisée en ce que** :
- ledit substrat hydrophile est un nontissé ;
- ladite mousse est une mousse de latex obtenue à partir d'une formulation à base de latex butadiène-styrène-acrylonitrile et/ou butadiène-acrylonitrile ;
- lesdites charges sont des charges de polychlorure de vinyle et/ou de polyéthylène.

## Patentansprüche

1. Bürstenkopf (Mopkörper) mit Fransen, welcher an einer Haltestange befestigt ist oder dazu bestimmt ist, an einer Haltestange befestigt zu werden, um eine Bürste mit Fransen zu bilden, umfassend eine Gesamtheit von flachen Fransen, welche fest verbunden ausgeführt sind, **dadurch gekennzeichnet, dass** wenigstens ein Teil der flachen Fransen der Gesamtheit wenigstens zum Teil aus wenigstens einem Verbundmaterial besteht, welches ein hydrophiles Substrat umfasst, auf einer Seite von welchem auf wenigstens einem Teil der Oberfläche der genannten Seite ein hydrophober Schaum mit offener Porosität fest verbunden aufgebracht ist.

2. Bürstenkopf mit Fransen nach Anspruch 1, **dadurch gekennzeichnet, dass** wenigstens ein Teil der flachen Fransen der Gesamtheit aus wenigstens einem Verbundmaterial des vorerwähnten Typs, vorteilhafterweise aus einem Verbundmaterial des vorerwähnten Typs, besteht.

3. Bürstenkopf mit Fransen nach einem der Ansprüche 1 oder 2, **dadurch gekennzeichnet, dass** die gesamten Fransen der Gesamtheit wenigstens zum Teil aus einem (mehreren) Verbundmaterial(ien) des vorerwähnten Typs, vorteilhafterweise aus einem Verbundmaterial des vorerwähnten Typs, bestehen.

4. Bürstenkopf mit Fransen nach Anspruch 3, **dadurch gekennzeichnet, dass** die Fransen fest verbunden ausgeführt sind derart, dass ihre wenigstens teilweise mit hydrophobem Schaum überzogenen Seiten in der gleichen Richtung, vorteilhafterweise nach außen orientiert sind.

5. Bürstenkopf mit Fransen nach Anspruch 4, **dadurch gekennzeichnet, dass** die gesamten Fransen der Gesamtheit aus einem Verbundmaterial, welches ein hydrophiles Substrat umfasst, welches auf der gesamten Oberfläche von einer von dessen Seiten mit einem hydrophoben Schaum mit offener Porosität überzogen ist, bestehen und fest verbunden ausgeführt sind derart, dass deren vollständig mit hydrophobem Schaum überzogenen Seiten in der gleichen Richtung, vorteilhafterweise nach außen orientiert sind.

6. Bürstenkopf mit Fransen nach einem der Ansprüche 1 oder 2, **dadurch gekennzeichnet, dass** nur ein Teil der Fransen der Gesamtheit wenigstens zum Teil aus einem (mehreren) Verbundmaterial(ien) des vorerwähnten Typs, vorteilhafterweise aus einem Verbundmaterial des vorerwähnten Typs besteht.

7. Bürstenkopf mit Fransen nach Anspruch 6, **dadurch gekennzeichnet, dass** die Fransen der Gesamtheit fest verbunden ausgeführt sind derart, dass sich die wenigstens teilweise aus dem (den) Verbundmaterial(ien) bestehenden Fransen an der Peripherie der Gesamtheit befinden, wobei deren wenigstens teilweise mit dem Schaum überzogenen Seiten nach außen orientiert sind.

8. Bürstenkopf mit Fransen nach einem der Ansprüche 1 bis 7, **dadurch gekennzeichnet, dass** das hydrophile Substrat ein Nonwoven (Vliesstoff), ein Gewebestoff, ein Strickgewebe, ein hydrophil gemachter Polyurethan-Schaum oder ein cellulosisches wabenartiges Material vom Schwamm- oder Schwammtuch-Typ ist.

9. Bürstenkopf mit Fransen nach einem der Ansprüche 1 bis 8, **dadurch gekennzeichnet, dass** der hydrophobe Schaum aus einem Polyurethan-, Polyvinylchlorid-, Polyvinylalkoholschaum oder vorteilhafterweise aus einem Latexschaum besteht.

10. Bürstenkopf mit Fransen nach Anspruch 9, **dadurch gekennzeichnet, dass** der hydrophobe Schaum aus einem Latexschaum besteht, welcher ausgehend von einer Formulierung auf der Grundlage von Butadien-Styrol-Acrylnitril- und/oder Butadien-Acrylnitril-Latex erhalten wird.

11. Bürstenkopf mit Fransen nach einem der Ansprüche 1 bis 10, **dadurch gekennzeichnet, dass** der hydrophobe Schaum mehr als 1 Gew.-%, vorteilhafterweise mehr als 5 Gew.-%, bezogen auf sein Trockengewicht, mineralische und/oder organische Füllstoffe umfasst.

12. Bürstenkopf mit Fransen nach Anspruch 11, **dadurch gekennzeichnet, dass** der Schaum weniger als 40 Gew.-%, vorteilhafterweise weniger als 35 Gew.-%, bezogen auf sein Trockengewicht, von diesen Füllstoffen enthält.

13. Bürstenkopf mit Fransen nach einem der Ansprüche 11 oder 12, **dadurch gekennzeichnet, dass** die Füllstoffe organische Füllstoffe sind, die eine rotationssymmetrische Form aufweisen und insbesondere aus Kugeln bestehen oder die eine asymmetrische Form aufweisen und insbesondere aus Splittern oder Fragmenten bestehen.

14. Bürstenkopf mit Fransen nach einem der Ansprüche 11 bis 13, **dadurch gekennzeichnet, dass** die Füllstoffe organische Füllstoffe aus einem Material, unter den Polyethylenen, den Polypropylenen, den Polyvinylchloriden, den Polystyrolen, den Polyacrylaten, den Polymethacrylaten, den Polyvinylacetaten, den ungesättigten Polyestern, den Polyurethanen, den Polyamiden, den entsprechenden Copolymeren, den Melamin-Formaldehyd-Harzen und den phenolischen Harzen, ausgewählt sind.

15. Bürstenkopf mit Fransen nach einem der Ansprüche 11 bis 14, **dadurch gekennzeichnet, dass** die Füllstoffe ihre größte Abmessung von 5 bis 600 µm, vorteilhafterweise von 10 bis 400 µm aufweisen.

16. Bürstenkopf mit Fransen nach einem der Ansprüche 11 bis 15, **dadurch gekennzeichnet, dass**:
- das hydrophile Substrat ein Nonwoven (Vliesstoff) ist;
- der Schaum ein Latexschaum ist, welcher ausgehend von einer Formulierung auf der Grundlage von Butadien-Styrol-Acrylnitril- und/oder Butadien-Acrylnitrillatex erhalten wird;
- die Füllstoffe Polyvinylchlorid- und/oder Polyethylen-Füllstoffe sind.

## Claims

1. Mophead attached to or intended to be attached to a handle to form a mop brush comprising an assembly of flat fringes joined together, **characterized in that** at least one part of the flat fringes of said assembly is at least partly in at least one composite material which comprises a hydrophilic substrate joined to one face of which, on at least part of the surface of said face, is an open porosity hydrophobic foam.

2. Mophead according to claim 1, **characterized in that** at least part of the flat fringes of said assembly is in at least one composite material of the aforesaid type; advantageously in a composite material of the aforesaid type.

3. Mophead according to claim 1 or 2, **characterized in that** all the fringes of said assembly are at least partly in one composite material(in composite materials) of the aforesaid type; advantageously in a composite material of the aforesaid type.

4. Mophead according to claim 3, **characterized in that** said fringes are joined together so that their faces coated at least partly with hydrophobic foam are oriented in the same direction, advantageously outwardly.

5. Mophead according to claim 4, **characterized in that** all the fringes of said assembly are in a composite material which comprises a hydrophilic substrate coated on the entire surface of one its faces with an open porosity hydrophobic foam, and are joined together so that their faces entirely coated with hydrophobic foam are oriented in the same direction, advantageously outwardly.

6. Mophead according to claim 1 or 2, **characterized in that** only part of the fringes of said assembly is at least partly in one composite material(in composite materials) of the aforesaid type; advantageously in a composite material of the aforesaid type.

7. Mophead according to claim 6, **characterized in that** the fringes of said assembly are joined together so that said fringes at least partly in said composite material(s) are positioned on the periphery of said assembly, their faces coated at least in part with said foam being oriented outwardly.

8. Mophead according to any one of claims 1 to 7, **characterized in that** said hydrophilic substrate is a non-woven, a fabric, a knit, a hydrophilized polyurethane foam or an alveolar cellulosic material of sponge or sponge-cloth type.

9. Mophead according to any one of claims 1 to 8, **characterized in that** said hydrophobic foam consists of a polyurethane, polyvinylchloride, polyvinyl alcohol foam or advantageously a latex foam.

10. Mophead according to claim 9, **characterized in that** said hydrophobic foam consists of a latex foam obtained from a formulation containing butadiene-styrene-acrylonitrile and/or butadiene-acrylonitrile latex.

11. Mophead according to any one of claims 1 to 10, **characterized in that** said hydrophobic foam contains mineral and/or organic fillers in an amount of more than 1 % by weight, and advantageously more than 5% by weight, relative to its dry weight.

12. Mophead according to claim 11, **characterized in that** said foam contains less than 40 %, advantageously less than 35 % by weight, of said fillers relative to its dry weight.

13. Mophead according to claim 11 or 12, **characterized in that** said fillers are organic fillers in a form with revolution symmetry and consist in particular of spheres, or are in asymmetric form and consist in particular of flakes or fragments.

14. Mophead according to claim 11 to 13, **characterized in that** said fillers are organic fillers made of a material chosen from among the polyethylenes, polypropylenes, vinyl polychlorides, polystyrenes, polyacrylates, polymethyacrylates, vinyl polyacetates, unsaturated polyesters, polyurethanes, polyamides, corresponding copolymers, melamine-formol resins and phenol resins.

15. Mophead according to any one of claims 11 to 14, **characterized in that** the largest size of said fillers lies between 5 and 600 µm, advantageously between 10 and 400 µm.

16. Mophead according to any one of claims 11 to 15, **characterized in that**:
- said hydrophilic substrate is a non-woven;
- said foam is a latex foam obtained from a formulation containing butadiene-styrene-acrylonitrile and/or butadiene-acrylonitrile latex;
- said fillers are fillers of polyvinylchloride and/or polyethylene.
